# EUROPEAN PATENT APPLICATION

(11) **EP 4 764 814 A1**
(43) Date of publication of application: **24.06.2026**
(21) Application number: 24221817.0
(22) Date of filing: 19.12.2024
(51) Int. Cl.: G06F 3/12

(54) **A PRINTER FOR PRINTING WITH A PRINT MEDIA-DETERMINED PRINT JOB END AND A METHOD THEREFOR**

(71) Applicant: CANON KABUSHIKI KAISHA, Tokyo 146-8501 (JP)
(72) Inventor: VONS, Johan G., Venlo (NL)
(74) Representative: Canon Production Printing IP Department

(57) **Abstract**

A printer 1, 1a, 1b comprising an entry station for receiving print media to be printed upon, an end station for storing the print media when printed, the entry station provided with a sensor to indicate when there is no more print media available in the entry station, and a print controller 12 for receiving print jobs and for controlling the printing process by means of a print queue. The control system 12 is configured to receive a print job in the print queue comprising print job data and print job settings which comprise a first setting indicating that the printing of the print job needs to automatically stop once an end of the print media is detected by the sensor. The print job comprises a second setting indicating what action is required for the print job once printing has automatically stopped due to the end of the print media detected by the sensor. A value of the second setting indicates to mark the print job as completed or to keep the print job in the print queue in order to allow a resume of printing the print job once the print media is available again in the entry station.

## Description

### BACKGROUND OF THE INVENTION

### Field of the invention

The present invention relates to a printer comprising an entry station for receiving print media to be printed upon, an end station for storing the print media when printed, the entry station provided with a first sensor to indicate when there is no more print media available in the entry station, and a control system for receiving print jobs and for controlling the printing process by means of a print queue.

The control system may also be referred to as controller or as control unit hereinafter.

The printer may also be referred to as a printing system or a print device. The printer may be a sheet-fed printer.

The at least one print head may also be referred to as a print unit.

A print job may also be referred to as a job.

A print queue may also be referred to as a print job queue.

The entry station may be an input tray or an input feeder.

Print media may also be abbreviated to media.

Hereinafter by the phrase "the end of media" or "an end of media" is meant that there is no more media left for use by a print job being printed. It could be there is more of the same media available elsewhere, but reserved for another print job.

### Description of Background Art

In corrugated printing, an end of a job is not determined by a requested amount of prints but by an amount of media available for the job. Such an amount is not known up front. The amount can be more than needed, but it may also be less. A job ends when there is no more media left for this job. But the printer does not know how much media there will be.

It is similar when printing a print job on a fixed but unknown amount of remaining media, as the exact amount of remaining sheets in a paper tray or on a pallet may be unknown.

For example, when handling cut-sheet or poster applications, the exact amount of prints is not that important but the amount of remaining media is close enough.

Not knowing the end of a job blocks the printer. An operator is needed to close the current job and continue with the next. An empty media input does not mean the job is completed, as a next stack may need to be loaded.

In such a situation, the printer currently cannot autonomously decide to mark the current job as completed, and it cannot continue with the next job. The control system of the printer would wait forever for more media.

In the flexographic print world, the operator sees that there are no more corrugated boards left to feed for the current job, and manually stops the printer. The stop is needed anyway as the printing plates must be changed.

There are digital printers that allow an operator to manually indicate when the job can be closed.

With digital printers, a certain amount of prints is usually requested, and the printer will produce exactly that amount of prints. Besides the difficulty of precisely estimating and/or counting the available sheets, an added difficulty is that a requested amount of prints pertains to the amount of good prints delivered on output. Even if the operator would know the exact number of available sheets, he has no way to know how many sheets will actually be delivered as good prints, as he cannot reliably predict how many sheets will be lost due to paper jams or used by the printer itself for other purposes for example a nozzle failure check, a sample print, etc.

Deliberately requesting a very high amount of prints doesn't work well, as the job will stop with an out-of-media error at some point. This way of working again requires operator intervention.

Some printers offer a media request time-out, which limits the time the printer will wait for new media to be loaded. However, such a time-out will also be triggered when there is more media but the operator does not load it into the printer in time. And when there really is no more media, it still means the printer stands still while waiting for the time-out to expire. Altogether, the above-mentioned solutions all have drawbacks.

### SUMMARY OF THE INVENTION

It is the objective of the present invention to provide a printer and a method for printing with a print media-determined print job end.

In accordance with the present invention, the control system of the printer is configured to receive a print job in the print queue comprising print job data and print job settings which comprise a first setting indicating that the printing of the print job needs to automatically stop once an end of the print media is detected by the first sensor, and wherein the print job comprises a second setting indicating what action is required for the print job once printing has automatically stopped due to the end of the print media detected by the first sensor, wherein a value of the second setting indicates to mark the print job as completed or to keep the print job in the print queue in order to allow a resume of printing the print job once the print media is available again in the entry station.

The first setting may be added to the print job via a user interface of the printer or may be present in the print job ticket when the print job arrives at the control system of the printer. The first setting may also be available as a system configuration setting as well, for example in corrugated printing the first setting is often more related to the way of working or to the market than to the individual print job.

Ticket or job editing are relevant when occasionally printing a more regular cut-sheet job on remaining media. The first setting indicates that the printing of the print job shall stop once the end of media is detected.

The second setting may be added to the print job via a user interface of the printer or may be present in the print job ticket when the print job arrives at the control system of the printer. The first setting may also be available as a system configuration setting as well, for example in corrugated printing the first setting is often more related to the way of working or to the market than to the individual print job. The second setting indicates what shall happen to the print job once printing is stopped: mark the print job as complete, or keeping the print job and allow the print job to resume later on once media is again available. This is advantageous, since the second setting has two options from which the operator or the creator of the print job can choose. Each of the two options have advantages for the printing of print jobs on the printer. When the first option is chosen that the print job is marked as completed, the printer can start with the next print job without loosing waiting time for reload of the print media for the current, i.e. the completed job. When the second option is chosen that the print jobs resumes printing on the print media once the entry station has been refilled, the sequence order of the print jobs is kept as originally scheduled. Print job delivery deadlines may be considered when choosing the first or second option.

The first sensor indicates there is no more media available for the print job in the printer's own entry station and is connected to the control system of the printer.

Due to the present invention the control system is capable to determine on its own when the printing of the job shall be stopped without waiting for time-outs or operator intervention, after which it can then automatically continue with a next job. This increases productivity and eliminates the need for an operator to be present at the printer.

In a corrugated printing environment, the present invention will also allow the job to be marked as completed and the actual amount of produced prints recorded, for example the consumed media, the consumed ink, etc.

In other environments, it allows a job to be printed on an unknown but fixed amount of remaining media without operator intervention and without waiting for time-outs.

In environments where the exact amount must be produced, the job can immediately be moved to a waiting area without waiting for a time-out to expire, to be resumed later once the required media is again available. The requested amount to print can then be updated to represent the remaining amount still to print. The waiting area may be a history queue or a waiting queue, i.e. a location from where the job can be restarted to print the remaining prints.

According to an embodiment the control system is configured to receive an indication that there is no more print media available for the print job outside the printer from a second sensor outside the printer, wherein the values of the first and second setting in the print job are also applicable when the end of media is detected both the first and second sensor. The second sensor for example detects that no additional stacks of media remain for the print job or there is no additional media in stock. In this case, both the first and second sensor must detect the end of media since only then it is clear that there is no more media left for the job and the values of both settings shall be applied.

According to an embodiment the second sensor is part of a transport management system or a storage management system for the printer. The second sensor may be controlled by a third party system which has to relay the sensor information to the control system of the printer.

According to an embodiment the control system is configured to record an amount of prints produced before an automatic stop due to the end of the print media detected by the first sensor and second sensor. Both the internal entry station and the external supply/feed system must report "no more media".

The present invention further relates to a method for printing with a print media-determined print job end by means of a printer according to the present invention, wherein the method comprises the steps of
a) the control system receiving a print job to be printed on print media, the print job comprising the first setting,
b) the first sensor detecting an end of print media in an entry station of the printer,
c) the control system of the printer automatically stopping the printing of the print job,
d) the control system reading out the value of the second setting, and
e) the control system applying a task determined by the value of the second setting.

According to an embodiment the method comprises the steps of the control system marking the print job as completed according to a value of the second setting and recording a number of successful prints. The control system may reporting the job status as "completed" to external systems. Moving the print job from a print queue to a print job history queue of the printer may facilitate reprints. Even when not visible in a history queue, the job information mentioned hereinabove may still be available in the form of accounting data. The job information, i.e. the job being marked as completed, the number of successful prints recorded, may possibly be available in a user interface, log files, and APIs.

According to an embodiment the method comprises the steps of the control system keeping the print job in the print queue, the control system receiving an indication from the first sensor that the print media is available again in the entry station, and the control system resuming the printing of the print job.

The present invention further relates to a non-transitory software product comprising program code on a machine-readable medium, which program code, when loaded into a control system of a printer according to the present invention, causes the printer to execute the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: are schematic drawings of printers according to embodiments of the present invention;
- Fig. 2: is a schematic drawing for automatic production with media-determined job end wherein a given amount is produced according to an embodiment of the present invention;
- Figs. 3-5: are schematic drawings for automatic production with media-determined job end wherein printing ends when there is no more media available according to embodiments of the present invention;
- Fig. 6: is a schematic block diagram illustrating the steps of a first method according to the present invention;
- Fig. 7: is a schematic block diagram elaborating some steps of the first method shown in Fig. 6; and
- Fig. 8: is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

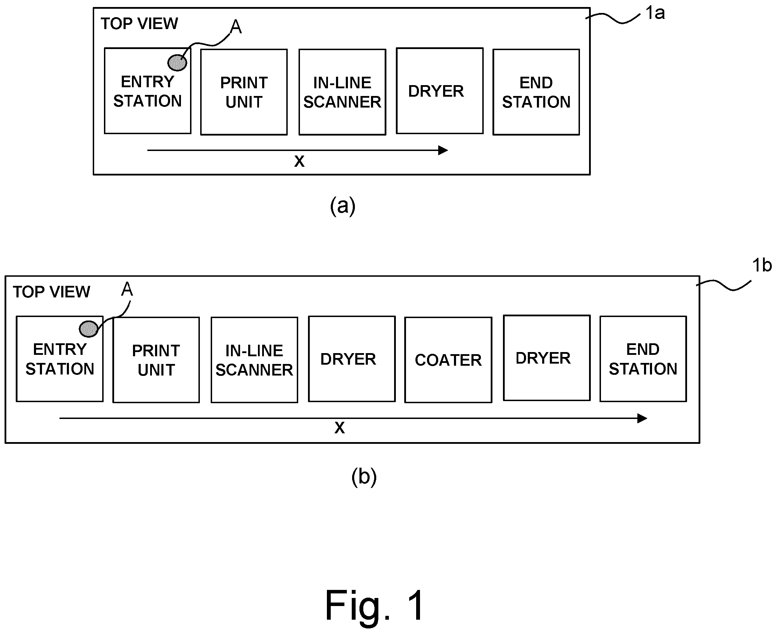

Fig. 1(a) is a schematic top view of a printer 1a configured to print on a substrate according to an embodiment of the present invention. The printer 1a comprises an entry station for receiving the substrate to be printed, a print unit comprising the at least one printhead for providing the marking material to the substrate, when the transport system moves the substrate along the at least one printhead in the media forward direction X. According to the present invention the entry station is provided with the first sensor A for detecting an end of media in the entry station.

Fig. 1(b) is a schematic top view of a printer 1b configured to print on a substrate which uses the same first sensor A in the entry station as described in the previous embodiment in Fig. 1(a). The printer 1b - additionally to the printer 1a in Fig. 1(a) - comprises a coater in-between the first drying station and a second drying station for drying the printed and coated substrate.

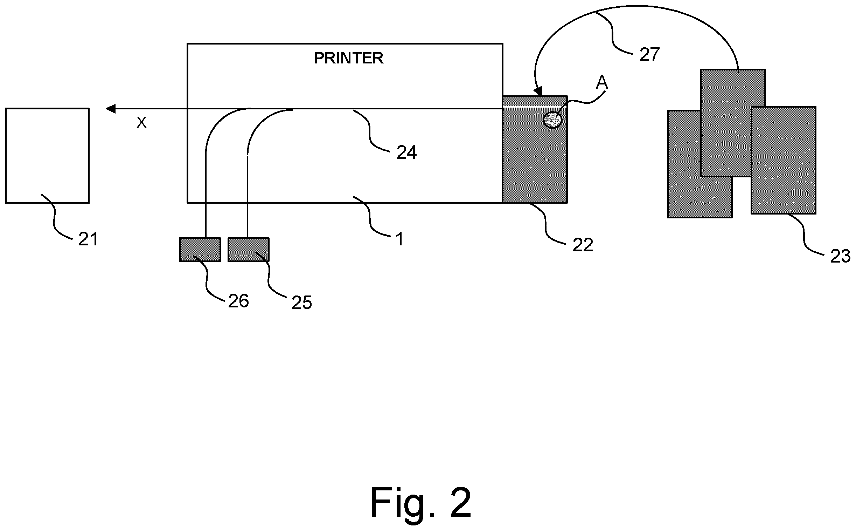

Fig. 2 shows printer 1 of Fig. 1(a) or Fig. 1(b) and a corresponding media transport path indicated by arrow 24 having an X direction from an entry station 22 to an end station 21. The entry station 22 is provided with the first physical sensor A. Fig. 2 shows a normal use case wherein a number of good prints is requested, and there is enough media to produce the requested number even when some prints are lost due to paper jams, nozzle failure detection test prints 25, samples 26, etc.

The amount of good prints to produce is fixed. The amount of sheets at the entry station 22 must be higher than the amount of good prints to be produced in order to compensate for waste, test prints 25 and samples 26.

In principle the input amount is "unlimited": at least a sum of the number of ordered prints in the print job plus the test prints 25 plus the samples 26 are in stock 23 and available for the print job. A refill 27 of the entry station 22 from stock 23 may be done until enough good prints have been produced.

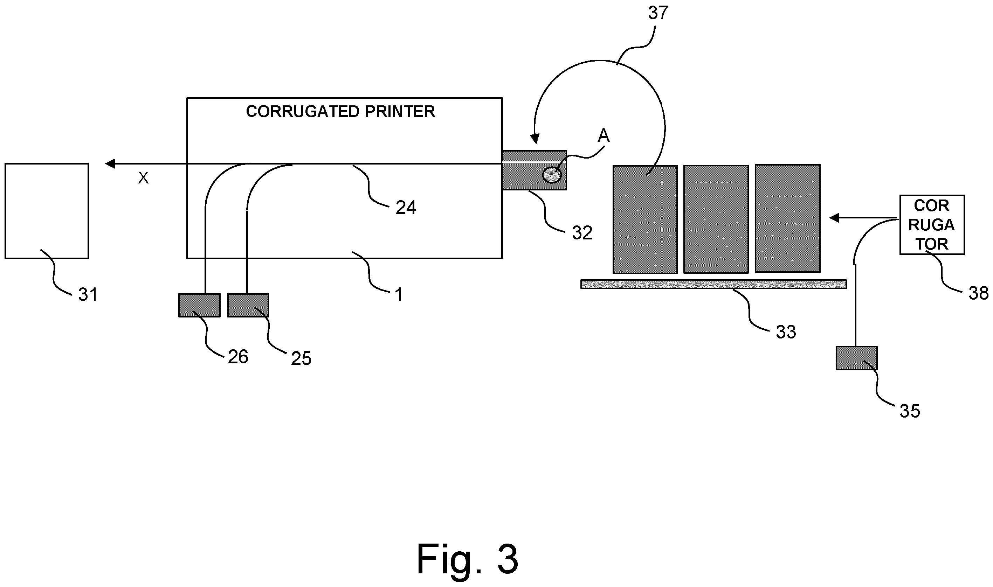

Fig. 3 shows a use case from the corrugated print world. A fixed (and unknown) amount of media is delivered to a feeder 32 of the corrugated printer 1, and all boards are printed on. The number of good prints produced 31 is an outcome. Since the amount of input boards is fixed, the produced amount decreases by the amount of waste 25, 35 and samples 26. The printer 1 might know the ordered amount of the print job, but for the printer 1 said amount is information only. A transport system 33 may carry a number of N boards which are produced by a corrugator 38 to the feeder 32 of the printer 1. The number N may be the ordered number in the print job plus an additional number for expected waste 35 produced by the corrugator 38. Moreover, the number N may be the ordered number from the job plus additional number for waste 25, 35 and samples 26 on the complete production line so also including whatever happens in post-processing like embellishment, die-cutting, folding & glueing, stacking for shipment, etc. A refill 37 of the feeder 32 may occur as long as there are boards left at the transport system 33. The amount of produced media for the print job is unknown and is usually higher than or equal to the ordered amount in the print job as the ordered amount is about the amount being shipped and the printer must print at least the ordered amount plus additional boards to compensate for waste on the production line after printing.

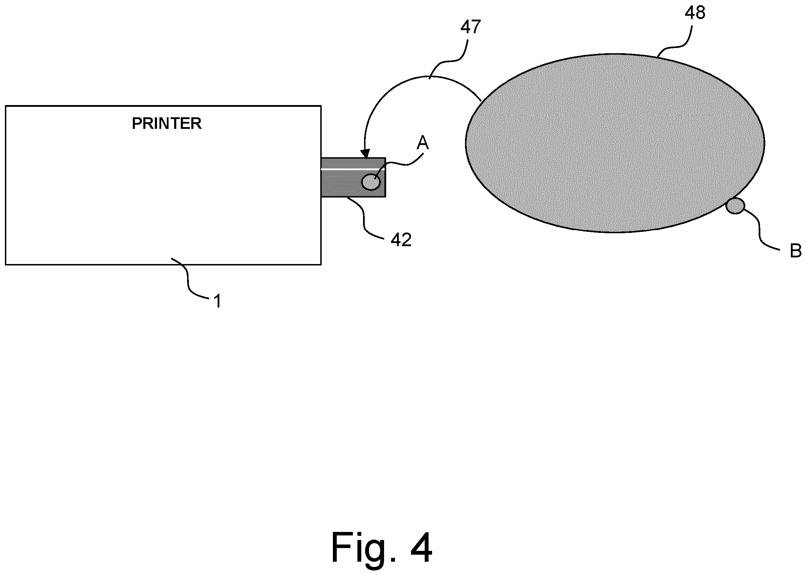

Fig. 4 shows a use case wherein the second sensor B is introduced. The printer 1 has an entry station 42 provided with the physical first sensor A to detect an end of media situation in the entry station 42. A refill 47 of the entry station 42 from a storage 48, i.e. a stock, of boards is facilitated. The storage 48 is provided with the second sensor B according to the present invention. The second sensor B may be a logical sensor to detect the situation "out of stock", i.e. an empty storage if the value of the sensor B is output from a stock management system (not shown). The printer 1 may be configured to end the print job when only the first sensor A detects an empty entry station 42, or when both the first sensor A and the second sensor B detect an empty entry station 42 and an empty storage 48 respectively.

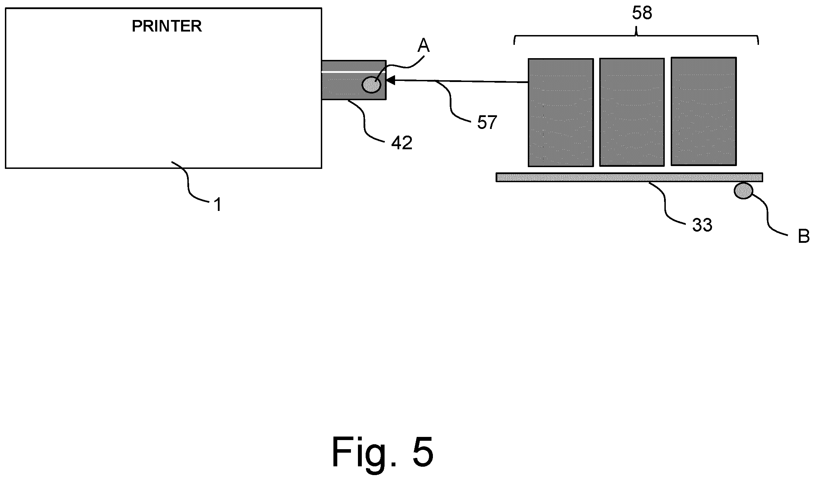

Fig. 5 shows a use case wherein a transport system 33 is involved. The printer 1 has an entry station 42 provided with the physical first sensor A to detect an end of media situation in the entry station 42. A refill 57 of the entry station 42 with boards from the transport system 33. The transport system 33 carries all boards produced for the print job. The transport system 33 is provided with the second sensor B according to the present invention. The second sensor B is configured to detect the situation "out of stock", i.e. no media left in the transport system 33. The printer 1 may be configured to end the print job when only the first sensor A detects an empty entry station 42, or when both the first sensor A and the second sensor B detect an empty entry station 42 and when there is no media left respectively. Sensor B may be a sensor of the transport system 33, or a logical sensor getting its value from a system that knows which stacks belong to which job. Said system may be the transport system 33 itself or a MIS/ERP system connected to the printer 1.

### Control

An embodiment of the control unit of the printers 1a, 1b shown in Fig. 1 is in more detail described hereinafter. The control unit comprises a Central Processing Unit (CPU), a Graphical Processor Unit (GPU), a Random Access Memory (RAM), a Read Only Memory (ROM), a network unit, a hard disk (HD) and an image processing unit such as a Raster Image Processor (RIP). The aforementioned units are interconnected through a bus system. However, the control unit may also be a distributed control unit.

The CPU controls the printing system 1 in accordance with control programs stored in the ROM or on the HD and a local user interface panel. The local user interface panel may be connected to the control unit via HDMI for example, or may be an independent personal computer connected to the control unit via a network connection. The print device is equal or equivalent to an embodiment of the printer 1a or the printer 1b of Fig. 1. The CPU for example controls the motor system (not shown) which drives a transport system of the printing system 1. The CPU also controls an image processing unit and the GPU. The ROM stores programs and data such as boot program, set-up program, various set-up data or the like, which are to be read out and executed by the CPU. The hard disk is an example of a non-volatile storage unit for storing and saving programs and data which make the CPU execute a print process to be described later. Also image quality control print jobs and the corresponding data may be stored in the hard disk. The hard disk also comprises an area for saving the data of externally submitted print jobs. The externally submitted print jobs may comprise a print job ticket which may comprise the first print job setting and the second print job setting according to the present invention. The programs and data on the HD are read out onto the RAM by the CPU as needed. The RAM has an area for temporarily storing the programs and data read out from the ROM and HD by the CPU, and a work area which is used by the CPU to execute various processes. The network unit connects the control unit to the network N and is designed to provide communication with workstations, the transport system and with other systems like ERP and MIS systems reachable via the network N. The image processing unit may be implemented as a software component running on an operation system of the control unit or as a firmware program, for example embodied in a field-programmable gate array (FPGA) or an application-specific integrated circuit (ASIC). The image processing unit has functions for reading, interpreting and rasterizing the print job data. Said print job data contains image data to be printed (i.e. fonts and graphics that describe the content of the document to be printed, described in a Page Description Language or a raster file format like TIFF or JPEG), image processing attributes and print job settings like the first setting and the second setting according to the present invention.

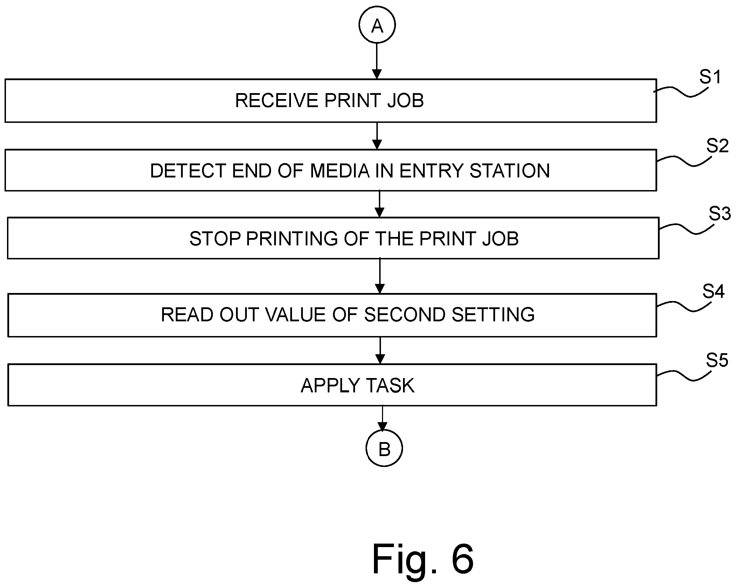

Fig. 6 describes an example of a first method according to the present invention. The method is suitable for printing with a print media-determined print job end by means of the printer 1a, 1b as shown in Fig 1(a) and Fig 1(b) respectively. The first method starts in a starting point A which leads to a first step S1.

In the first step S1 the control system receives a print job to be printed on print media. The print job comprises the first setting according to the present invention.

In a second step S2 the first sensor detects an end of print media in the entry station of the printer.

In a third step S3 the control system of the printer automatically stops the printing of the print job. In this step, the control system evaluates the first setting and decides to stop the print job if requested by the value of the first setting.

In a fourth step S4 the control system reads out the value of the second setting according to the present invention.

In a fifth step S5 the control system applies a task determined by the value of the second setting.

The first method ends in an end point B.

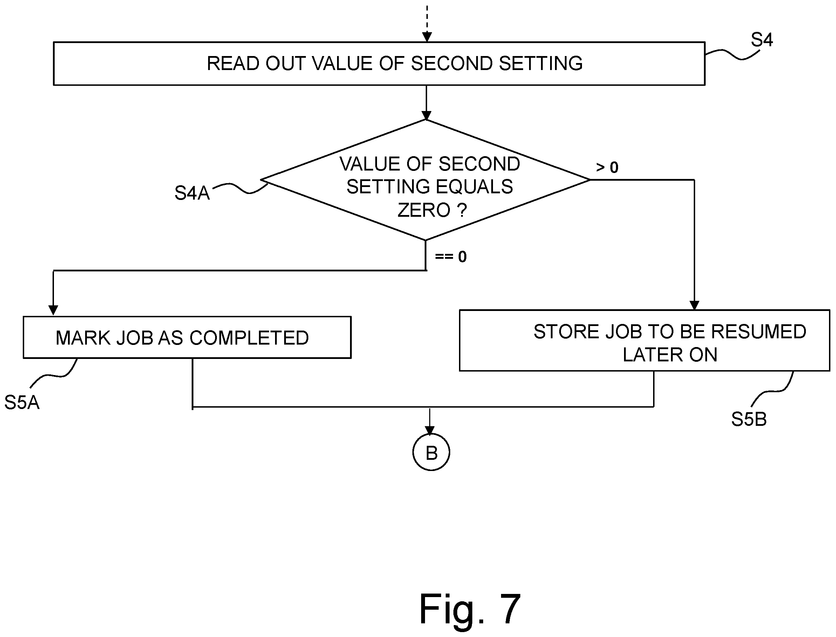

The fourth step S4 and the fifth step S5 are further elaborated in Fig. 7. Between the fourth step S4 and the fifth step S5 the tasks determined by the value of the second setting are shown. In a first additional step S4A it is checked what the value of the second setting actually is. If the value equals zero, the method proceeds with a second additional step S5A, else - when the value is a larger integer than zero - the method proceeds with a third additional step S5B.

For convenience reasons the value zero and larger integer values are mentioned hereabove as an example. Other implementations may be envisioned.

In the second additional step S5A the control system marks the print job as completed according to the zero value of the second setting. The print job is moved from the print queue to a print job history queue of the printer or just completely deleted. This is advantageous, since the operator does not have to wait for media amounts which according to a number of copies should still be printed for the print job, but the printer automatically starts the next print job when the entry station is filled with print media which is needed for the next print job. By doing so, a down time of the printer is reduced.

In the third additional step S5B the control system keeps the print job in the print queue or in a waiting queue or in a waiting room. The actual number of already printed boards is subtracted from the original requested copies in the print job and stored with the print job. When the control system receives an indication from the first sensor that the print media is available again in the entry station, the control system is resuming the printing of the print job.

The method ends in the end point B.

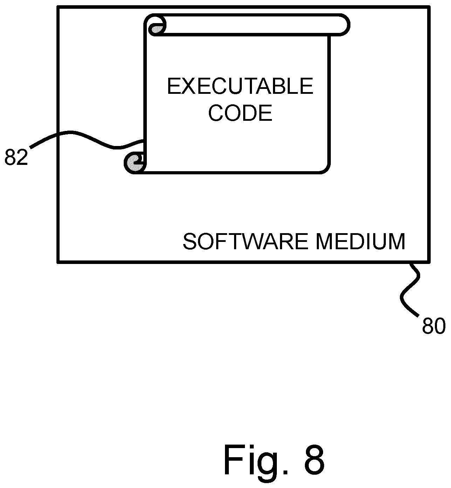

FIG. 8 schematically shows a non-transitory software medium 80 according to the invention. The software medium 80 comprises executable code 82 configured to, when executed, perform the method according to the invention, e.g. as described with respect to either the printing system 1a, 1b shown in FIG. 1 or the method of controlling the printing system 1a, 1b according to the present invention shown in Figs. 6 and 7 and/or according to any of the variants and modifications of the printing system 1a, 1b and/or of the method described hereinbefore.

The non-transitory software medium 80 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A printer (1, 1a, 1b) comprising an entry station for receiving print media to be printed upon, an end station for storing the print media when printed, the entry station provided with a first sensor to indicate when there is no more print media available in the entry station, and a control system (12) for receiving print jobs and for controlling the printing process by means of a print queue, wherein the control system (12) is configured to receive a print job in the print queue comprising print job data and print job settings which comprise a first setting indicating that the printing of the print job needs to automatically stop once an end of the print media is detected by the first sensor, and wherein the print job comprises a second setting indicating what action is required for the print job once printing has automatically stopped due to the end of the print media detected by the first sensor, wherein a value of the second setting indicates to mark the print job as completed or to keep the print job in the print queue in order to allow a resume of printing the print job once the print media is available again in the entry station.

2. A printer according to claim 1, wherein the control system (12) is configured to receive an indication that there is no more print media available for the print job outside the printer from a second sensor outside the printer (1, 1a, 1b), wherein the values of the first and second setting in the print job are also applicable when the end of media is detected by both the first and second sensor.

3. A printer according to claim 2, wherein the second sensor is part of a transport management system or a storage management system for the printer (1, 1a, 1b).

4. A printer according to claim 2 or 3, wherein the control system (12) is configured to record an amount of prints produced before an automatic stop due to the end of the print media detected by the first sensor and the second sensor.

5. A method for printing with a print media-determined print job end by means of a printer (1, 1a, 1b) according to any of the preceding claims, wherein the method comprises the steps of
a) the control system (12) receiving a print job to be printed on print media, the print job comprising the first setting,
b) the first sensor detecting an end of print media in an entry station of the printer,
c) the control system (12) of the printer automatically stopping the printing of the print job,
d) the control system (12) reading out the value of the second setting, and
e) the control system (12) applying a task determined by the value of the second setting.

6. A method according to claim 5, wherein the method comprises the steps of the control system marking the print job as completed according to a value of the second setting and recording a number of successful prints.

7. A method according to claim 5, wherein the method comprises the steps of the control system (12) keeping the print job in the print queue, the control system (12) receiving an indication from the first sensor that the print media is available again in the entry station, and the control system (12) resuming the printing of the print job.

8. A non-transitory software product comprising program code (52) on a machine-readable medium (50), which program code (52), when loaded into a control system (12) of a printer (1, 1a, 1b) according to any of the claims 1 - 4, causes the printer (1, 1a ,1b) to execute the steps of the method according to any of the claim 5 - 7.
